Europäisches Patentamt

European Patent Office

Office européen des brevets

(19)

(11) Publication number:

**0 392 690
A2**

(12) **EUROPEAN PATENT APPLICATION**

(21) Application number: **90303166.4**

(22) Date of filing: **23.03.90**

(51) Int. Cl.5: **B29C 47/88, B29D 7/01,
B29D 23/00, //B29L7:00,
B29L23:00**

(30) Priority: **10.04.89 US 335611**

(43) Date of publication of application:
**17.10.90 Bulletin 90/42**

(84) Designated Contracting States:
**BE DE FR GB IT NL**

(71) Applicant: **EXXON CHEMICAL PATENTS INC.
200 Park Avenue
Florham Park New Jersey 07932(US)**

(72) Inventor: **Kurzbuch, Werner
3803 Del Oro Drive
Baytown, Texas 77521(US)**
Inventor: **Taylor, Robert Allen
2433 Hamilton Street
Bright's Grove, Ontario N0N 1C0(CA)**

(74) Representative: **Veldhuizen, Albert Dirk
Willem et al
Exxon Chemical Limited European Patents
and Licences Exxon Chemical Technology
Centre P.O. Box 1
Abingdon Oxfordshire OX13 6BB(GB)**

(54) **Method and apparatus for formation of thermoplastic film.**

(57) An apparatus and method for high-production rate processing of extruded tubular thermoplastic thick-thin film having at least one, preferably two, thickened wall profiles in the longitudinal direction of the film as it is formed. The method steps includes extruding a molten thermoplastic extrudate from an annular die (6), cooling the extrudate so as to form a film bubble (12) having a thickened wall portion (12a, 12b) and further cooling the thickened wall portion (12a,12b) to avoid difficulties after the bubble (12) is collapsed and fed through nip rolls (22a,22b) for collection or subsequent processing. The product film is especially useful for shopping bags with handles.

## METHOD AND APPARATUS FOR FORMATION OF THERMOPLASTIC FILM

The present invention relates to a method and apparatus for the formation of a continuous tubular thermoplastic film from an extrudate of thermoplastic polymeric material and, more particularly, relates to a thermoplastic film having a thickened wall extending in the direction of the longitudinal axis of the film, commonly referred to as "thick-thin" film.

The formation of thermoplastic tubular film through the extrusion of molten thermoplastic polymeric materials wherein the materials are conducted through an annular extrusion die orifice, employed for the manufacture of film, tubing, pipes, and the like, is well-known plastics extrusion techology. In order to regulate the rate of cooling and solidification of the extrudate, it has frequently been found desirable to contact the surface of the molten or still heat-plastified thermoplastic material leaving the extrusion die orifice with a stream of a suitable cooling medium and, as a result, to control the properties and physical configuration of the finished extruded product.

Various commercial products, such as, for example, some widely used sandwich, trash, and garbage bags, formed from a thermoplastic film material, and now, particularly certain shopping bags, are improved by varying material thicknesses to be heavier towards the top or opening of the bag where they are normally gripped and handled by a user in order to minimize tearing of the film and to concurrently make the bag feel thick, giving comfort to a user. It is often not necessary to provide a heavy gauge of film throughout the body of the bag where it is rarely handled and where lower mechanical stress may be developed. Consequently, a concept has been developed which is designed to effect substantial savings in the required quantities of polymeric material used without sacrificing performance of the finished product. A portion of the film is thickened upon extrusion of the polymeric material to provide the desired film thickness at the top of the bag while allowing for a thinner film thickness in the body of the bag.

Discussion of the Prior Art

Heretofore, various methods and apparatus have been proposed for manufacturing techniques to form thermoplastic film with profiled thicknesses; nevertheless, none of these have proven to be completely satisfactory in actual practice to give the desired degree of control in the formation of extruded profiled thermoplastic film.

Behr U.S. Pat. No. 3,852,386 discloses the production of an extruded plastic tubular film having circumferentially spaced thickened film sections or profiles extending continuously in the axial direction of the film. These sections are adapted to interlock mechanically with each other so as to constitute a zipper-like fastener integrally formed with the film. The profiled sections in the film are formed through the provision of different rates of cooling after the film has been extruded from an annular die subsequent to the expansion of the tubular film, but while the film is in a still hot state. As may be clearly ascertained, the formation of the profiled sections in the film wall is effected in a region having been subjected to primary cooling and inflating of the film, in which such profiling is rather difficult to achieve in any satisfactorily controlled manner. Consequently, the apparatus and method disclosed in this patent are bounded by extensive restrictions in the formation of precise profiled wall sections in extruded thermoplastic films.

Similarly, British Patent Nos. 1,250,945 and 1,236,831 each disclose processes for the production of tubular thermoplastic film which includes at least one longitudinal zone wherein the wall thickness of the film is heavier than the thickness of the remainder of the film and also describes the formation of bags with that process. In each of the British patents, the selective cooling of the extruded film is effected subsequent to the primary cooling and inflating of the tubular plastic film, which renders the formation of controlled profiled wall structure extensively difficult, if not completely impossible.

An apparatus and method is disclosed in U.S. Pat. No. 4,209,475 which describes an apparatus for adjusting a cooling medium air flow from a cooling ring encompassing an extrusion die orifice so as to cool more extensively in selected regions of the film. The patented apparatus provides for a large number of adjustable deflector blades which are circumferentially arranged about the extrusion die orifice of the apparatus, and are basically designed to provide adjustment so as to compensate for errors or irregularities in the thickness of the plastic film produced by the extrusion die. Conceivably, the apparatus can be employed in producing a variation in the film thickness when the extrusion die is of a precise configuration and, upon effecting displacement of the deflector blades, is capable of producing extruded thermoplastic tubular film with a profiled thickness. However, the apparatus operates with relatively high air-cooling speeds and flow rates and is not designed to provide a controlled profiled tubular film in a manner utilizing relatively low air-cooling flow speeds and rates.

Later U.S. Pat. No. 4,443,400 teaches selective cooling of the extruded film in order to form a thickened film wall section in the longitudinal direction of the tubular plastic film prior to the general uniform cooling of the film. The patent also describes apparatus useful for forming the thickened longitudinal film wall section.

Basically, in accordance with the previously mentioned concept, when forming extruded tubular thermoplastic film which is intended to be utilized in the formation of a bag, the cooling rate is considerably lower than that employed with usual tubular plastic film extrusion processes, so that the amount of cooling medium, usually air, which leaves the cooling ring is relatively small. In practicing the prior art, blocking the film has occured only on rare occasions. Blocking is said to occur when the sides of the collapsed film bubble sticks together becoming difficult to separate for use as a bag. Some blocking, or sticking, may be so severe that a two-ply sheet may result where separation is impossible.

## SUMMARY OF THE INVENTION

We have found that the thickened portion of a film will still be at an elevated temperature as it approaches the nip rolls for pressing the film into a flat collapsed tubular film. When pressed flat, blocking is likely to occur when the film is hot. Therefore, different process steps and apparatus to provide for the localized cooling of the extruded tubular plastic film at a place in the process where the thermoplastic polymeric material is still in a heated condition are needed in order to prevent blocking of the film at the nip rolls. Now, however, there is especially a need to substantially increase production of the bag film and to take advantage of new linear low density polyethylene film resins. While the old, slow cooling rate had been satisfactory, such is no longer the case with higher production rates since production is often interrupted by blocking of the film at the nip rolls. Thus, substantial difficulties have remained and have become more acute.

It is an advantage of this invention to provide a cooling step prior to or during the collapsing of the film which cools the film in its thickened portion prior to the nip rolls. The present invention advantageously permits an increase in production rates of thick-thin films by preventing difficulties such as blocking during collection and subsequent handling of the film.

Essentially, an apparatus for forming a tubular thermoplastic film, including film having a thickened longitudinal portion, thick-thin film, is well recognized. Such apparatus normally has an annular extrusion die orifice through which the extruded plastic material is conveyed while in a molten, heat-plastified, or melt state to form an inflated tubular extrudate. The apparatus is adapted to direct a cooling medium, such as air, against the circumferential surface of the extruded tubular extrudate material. The extrusion of film forming material and subsequent cooling is carried out, using known methods and apparatus to produce a column of film having thickened longitudinal portions, thick-thin film, usually two such thickened portions diametrically opposed are formed, so that sturdy handles may be fashioned.

In the practice of this invention, the partially cooled film would extend upwardly towards the nip rolls where the film bubble is collapsed on a collapsing frame and gusseting blades (when applicable) just prior to entering the nip rolls, where the opposing thickened portions of the film bubble are pressed together by the rolls and the flattened tube is collected for heat sealing and cutting to form bags having thickened handles, resulting from the opposing thickened portions of the film being collapsed together.

This subsequent localized cooling of the film bubble is accomplished in accordance with the present invention while preferentially cooling the thickened portion of contacting a cooled portion of the collapsing frame or by directing refrigerated cooling medium, preferably air, against the thickened portions of the bubble surface as the surface moves along the frame toward the nip rolls. The air is expelled from an air plenum carried by the collapsing frame, within the area of contact of the tubular film against the collapsing frame. The plenum or cooling box may be integral with, or attached to, the collapsing form. This localized cooling of the thickened portions of the tubing effectively prevents blocking of the film.

It is an object of the present invention to provide a method wherein localized cooling is imparted to an extruded thermoplastic tubular film material having thickened longitudinal portions to avoid film blocking at the nip rolls.

A further object of the present invention resides in providing apparatus for implementing the method whereby cooling is supplied to the thickened longitudinal portion of the film bubble from contact with a chilled collapsing frame or cooling by directing cooling medium from a plenum carried by frames for collapsing the film bubble prior to compression by the nip rolls.

## BRIEF DESCRIPTION OF THE DRAWINGS

Reference may now be had to the following detailed description of preferred embodiments of apparatus pursuant to the invention for providing the advantages and meeting the objectives of this invention, taken in conjunction with the accompanying drawings; in which:

Fig. 1 illustrates, schematically in elevation, a typical apparatus for the preparation of a blown film with means in place carried by the collapsing frame for localized cooling of the longitudinal thickened portion of the film bubble.

Fig. 2 shows the cooling means in greater detail as a cooling air plenum attached to the collapsing frame.

Fig. 3 shows a cross-section of the collapsed film bubble showing the thickened profile.

Fig. 4 shows a section of collapsed film after heat sealing and cutting of bags prior to separation with the handlesformed on the thickened sections.

## DESCRIPTION OF THE PREFERRED EMBODIMENT

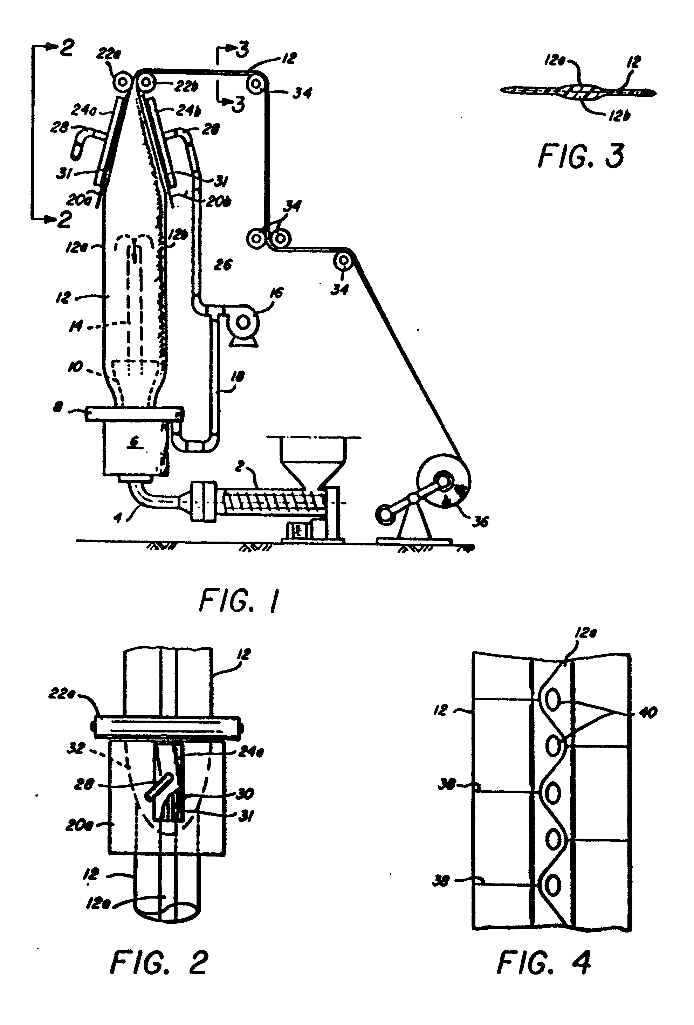

The following more detailed description of a preferred embodiment of this invention is made in connection with the drawings as described above. In Fig. 1 the extruder 2, which may be of any design well-known to those skilled in the art for this purpose, conveys and plasticizes the thermoplastic material to a melt which is fed through the connection 4 into an annular extrusion die, or film blowing head 6 with an outer cooling ring 8 and optional inner cooling apparatus 10. The melt is formed into an inflated tubular film 12. The apparatus, schematically illustrated in Fig. 1, may be of many designs well-known to those skilled in the art for the preparation of tubular plastic film having longitudinally oriented thicker portions, thick-thin films. Therefore, the details of specific apparatus will not be described herein. Reference may be had to U.S. Patent Nos. 3,265,789, 4,265,853, 4,209,475, and 4,443,400, all of which describe methods for preparing tubular thermoplastic films having varying thickness, the disclosures and descriptions of which are incorporated herein by reference in their entirety for all purposes.

The thermoplastic materials useful in the practice of this invention are those which are well-known and have been used in the past. The economic advantage of the process and apparatus of the present invention is broadly applicable to a variety of thermoplastic resins used in blown film production, including but not limited to high pressure, low and medium density polyethylene homopolymers and copolymers; linear low and medium density polyethylenes and other polyalpha-olefins. These include LLDPE, ethylene/vinyl acetate, ethylene/methyl (meth)acrylates, ethylene/acrylic acids, polybutylenes, and the like, and blends of these materials. In addition to such well-known plastic materials, the linear low density polyethylenes (LLDPE) commonly processed at having higher melt temperatures than traditional polyethylene are particularly suitable for the preparation of plastic bags. As such, the LLDPE resins find use in the apparatus and method described herein because of the advantageously placed final cooling means of this invention. Even though higher melt temperatures are involved and faster extrusion rates than previously used are practiced in processing such polyethylenes, resulting in less cooling time, blockage at the nip rolls is alleviated. As can be understood and seen from the foregoing, other processing steps can be used to control the thickness of the thick-thin film bubble 12 during the process as described in U.S. Patent Nos. 4,246,212 and 4,339,403, for example, which are incorporated herein by reference in their entirety for all purposes.

Air is supplied from blower 16 through conduit 18 and, thence, to cooling ring 8. This forms a first zone for localized coolings which is preferably substantially circumferential; i.e. cools substantially the whole periphery. The cooling zone is limited in an longitudinal sense in the direction of movement of the extrudate. It is understood that for purposes of discussion, only a single air inlet to the cooling ring is described, it being well-known to those skilled in the art than many modifications are involved with respect to the direction of cooling air to such cooling ring. During the operation of the apparatus, cooling air may be supplied inside the bubble of the film 12 by optional inner cooling apparatus 10 to again preferably cool the whole interior periphery. Heated air is then withdrawn through suction tube 14. As described in the aforementioned patents, the film bubble is created with longitudinally oriented thickened portions 12a and 12b in a first localized cooling zone in the practice described herein. As the bubble 12 moves downstream in the process from the film blowing head 6, it is cooled and solidified. However, the thickened portions 12a and 12b remain hot when coming into contact with the collapsing frames 20a and 20b and upon entering nip rolls 22a and 22b. We found that blocking problems frequently occur at the nip rolls because the extruded thickened portions 12a and 12b of plastic bubble 12, are sufficiently hot to permit a blockage of the film at the nip rolls 22a and 22b. Coincidentally, the hot film can also stick against the collapsing frames 20a and 20b thus causing operating problems.

Sticking and/or blocking is alleviated by the practice of this invention by providing a second localized cooling zone for the thickened portions 12a and 12b of the thick-thin film 12c by cooling with direct contact with an internally cooled plate (not shown) or a cooling medium directed from air boxes or plenums 24a and 24b carried by collapsing frames 20a and 20b, respectively, immediately prior to the nip rolls 22a and 22b, respectively. The second localized cooling zone is preferably limited to one or more spaced portions of the extrudate periphery to cool mainly the thickened portions. The axial extent is sufficient to provide the appropriate level of cooling of the thickened portions. The thickened longitudinal portions 12a and 12b of the thick-thin film 12 are oriented on the film 12 such that they pass in contact with the collapsing frames 20a and 20b, beneath the plenums 24a and 24b. The plenums are fed from air blower 16 through conduit 26 and nipple 28 into plenum 24b. The similar apparatus other than nipple 28 is now shown for plenum 24a; however, it is understood that there is a corresponding conduit arrangement supplying air to the air plenum 24a carried by collapsing frame 20a. Alternatively, the cooling medium may be supplied to plenums 24a and 24b through conduits drawing air from cooling ring 8 (not shown).

As shown in Fig. 2, the plenum is a rectangular box, though any geometric shape is satisfactory, fashioned to create an interim chamber bounded by impervious walls and, in the embodiment shown, is attached to the collapsing frame 20a, while including perforations 30 in the inner wall 31 which allow the passage of air from nipple 28 through plenum 24, through the collapsing frame 20a to contact the longitudinal thickened portion 12a of the film bubble 12. Of course, the plenum 24 may be integral with, a part of, collapsing frame 20 as well as attached to it in the form of an attached rectangular box.

As the film bubble 12 contacts the collapsing frames 20a and 20b, a parabolic-shaped contact region 32 is created (Fig. 2). The plenum 24a can preferably be as long as the contact portion of the thickened longitudinal sections 12a and 12b of bubble 12. Of course, its width is determined by the width of the thickened portion to be finally cooled. The nip rolls 22a and 22b compress the collapsed bubble 12 with the thickened portions 12a and 12b opposing each other as shown in Fig. 3. The film 12, now flattened, proceeds over a series of rollers 34 (Fig. 1) to a collection apparatus, shown here as a take-up spool 36 where it is collected for later processing into bags having the improved thickened handles as described in the practice of this invention. This manner of processing is well-known to those of ordinary skill in the art, and the configuration of the plastic bags is shown in Fig. 4, with heat-sealed seams 38 and holes 40 for use as handles cut through thickened portion 12a and 12b of the film 12. Alternatively, rollers 34 and collection apparatus 36 can be supplemented or replaced by other operational elements to perform other steps which to others may be desirable such as, for example, the heat-sealing of seams, perforating for separating, and cutting holes for the handles in line with the extrusion process itself.

As can be seen from the foregoing, the advantages achieved from the practice of this invention allow the formation of a sturdy plastic bag from high-volume processes using materials which would otherwise present significant other processing difficulties due to higher operating temperatures and faster operating speeds.

## Claims

1. Method of forming an extruded tubular thermoplastic film having at least one thickened wall portion extending in the direction of the extruded tubular film, comprising:
extruding a molten thermoplastic polymeric material through an annular extrusion die to form an inflated tubular extrudate.
cooling said tubular extrudate while passing said tubular extrudate through a first zone of localized cooling while said extrudate is in the melt state to form a tubular thick-thin film bubble; and
passing the cooled thick-thin bubble through a second localized cooling zone to further cool the thick wall portion.

2. Method according to claim 1 wherein said first cooling zone comprises cooling external to said tubular extrudate and/or internal bubble cooling.

3. Method according to claim 1 or claim 2 wherein said thermoplastic polymeric material is linear low density polyethylene or an ethylene/vinyl acetate copolymer.

4. Method according to any of the preceding claims wherein said first localized cooling is provided to form a pair of thickened wall portions opposite each other in said tubular film bubble.

5. Method according to any of the preceding claims wherein cooling said thickened wall portion in said second localized cooling zone comprises directing a cooling medium against said thickened wall portion and/or wherein cooling said thickened wall portion in said second localized cooling zone comprises contacting said thickened wall portion with an internally cooled plate.

6. Method according to any of the preceding claims further comprising collapsing said tubular film bubble and then passing the collapsed thick-thin film through nip rolls for collection or subsequent processing, optionally with cooling of said thickened wall portion being carried out while collapsing said thick-thin tubular film bubble.

7. Method according to any of the preceding claims which comprises forming an extruded tubular polyethylene film having two opposed thickened wall portions extending in the longitudinal direction of the extended tubular film with localized cooling being applied to two opposing peripheral portions of said tubular extrudate within said first cooling zone to form said tubular film bubble with two opposed thickened wall portions extending in the longitudinal direction of said tubular film bubble and with further cooling of said two opposed thickened wall portions in a second localized cooling zone while simultaneously collapsing said bubble.

8. Apparatus for forming an extruded tubular thermoplastic film having at least one region of a thickened wall profile extending in the longitudinal direction of the extruded film, said apparatus comprising:

an annular extrusion die (6) for extruding a molten thermoplastic material to form an inflated tubular extrudate (12);

a cooling ring (8) having a central opening mounted in line with, and downstream of, said extrusion die wherein said inflated tubular extrudate (12) passes through said central opening, said cooling ring including first means for directing a flow of a cooling medium against the peripheral surface of said inflated tubular extrudate while in a melt state so as to form a tubular film bubble;

second means adjacent said cooling ring for selectively directing a cooling medium against a portion of the peripheral surface of said inflated tubular extrudate to form a thickened wall profile in the extrudate in the longitudinal direction in the tubular film bubble; and

downstream of said second means, further means (28, 24, 31) for localized cooling of the thickened wall of said tubular film bubble to prevent difficulties in collecting the film.

9. Apparatus according to claim 8 wherein said first means for directing a flow of cooling medium includes an internal bubble cooling means and/or wherein there is further provided means for collapsing the tubular film prior to entering nip rolls for collecting the collapsed film.

10. Apparatus according to any of claims 8 or 9 wherein said further means for cooling comprises cooling boxes providing a flow of cooling medium against the thickened wall of the collapsing tubular film bubble, said cooling boxes being carried by said means for collapsing the tubular film and/or wherein said further means for cooling comprises an internally cooled plate located upstream of said nip rolls to contact the thickened wall of said tubular film bubble.

FIG. 3

FIG. 1

FIG. 2

FIG. 4